# EUROPEAN PATENT APPLICATION

(11) **EP 4 635 659 A1**
(43) Date of publication of application: **22.10.2025**
(21) Application number: 24750352.7
(22) Date of filing: 31.01.2024
(51) Int. Cl.: B23C 5/06, B23C 5/22, B23C 5/24

(54) **FACE MILL**

(30) Priority: 31.01.2023 JP 2023013483
(71) Applicant: Makino Milling Machine Co., Ltd., Tokyo 152-8578 (JP)
(72) Inventor: NAGATA, Fukuhito, Aiko-gun, Kanagawa 243-0303 (JP); MAEDA, Junichi, Aiko-gun, Kanagawa 243-0303 (JP); UENO, Hiroshi, Aiko-gun, Kanagawa 243-0303 (JP); HOSHI, Yoshio, Aiko-gun, Kanagawa 243-0303 (JP); YABE, Kazutoshi, Aiko-gun, Kanagawa 243-0303 (JP); OKAZAKI, Teruyoshi, Aiko-gun, Kanagawa 243-0303 (JP); SUGASAKI, Takaaki, Aiko-gun, Kanagawa 243-0303 (JP)
(74) Representative: McWilliams, David John
(86) International application number: PCT/JP2024/003137
(87) International publication number: WO 2024/162403

(57) **Abstract**

A face mill comprising: a cutter body (110) having accommodation holes (114) that open in the direction of a rotation axis O, and first through holes (118a, 118b) that are substantially perpendicular to the rotation axis and penetrate into the corresponding accommodation holes from the outer periphery; cartridges (10) that are inserted into accommodation holes, each cartridge having second through holes (12a, 12b) and having fixed thereto a cutting tip (16) having a cutting edge (16b); fixing tools (20), each of which is inserted into the accommodation hole, disposed on the inner side with respect to the rotation axis relative to the cartridge, and has formed therein a screw hole that extends in a radial direction with respect to the rotation axis; and fixing bolts (120), each of which is inserted into the first through hole from the outer periphery of the cutter body, passes through the second through hole and is screwed into the screw hole of the fixing tool, thereby sandwiching and fixing the cartridge between the outer periphery of the cutter body and the fixing tool.

## Description

### FIELD

The present invention relates to a face mill in which a plurality of cartridges, each equipped with a cutting tip, are attached to a cutter body.

### BACKGROUND

Face mills are used to cut large ranges of surfaces perpendicular to a spindle.

Patent Literature 1 describes, as an example of such a face mill, a tool head, comprising a tool head body, a cylindrical sleeve which is affixed to the tool head body, a quill which is axially slidably attached to the sleeve and which has a cutting edge protruding from the tool head body, and an adjustment screw for adjusting a protrusion amount of the cutting edge.

Patent Literature 2 describes a milling cutter, comprising a cartridge to which a tip is affixed, a body in which there is formed a pocket into which the cartridge is inserted, and a fastener for affixation of the cartridge, wherein the body has a fastener insertion hole adjacent to the radially inner side of the pocket and a partition wall between the pocket and the fastener insertion hole, and the fastener inserted into the fastener insertion hole exerts a radially outward force on the partition wall, whereby the cartridge is affixed to the pocket based on the radially outward force thereof.

### [CITATION LIST]

### [PATENT LITERATURE]

[PTL 1] Japanese Unexamined Patent Publication (Kokai) No. 2008-110408
[PTL 2] Japanese Unexamined Patent Publication (Kokai) No. 2020-199572

### SUMMARY

### [TECHNICAL PROBLEM]

In the tool head of Patent Literature 1, since the quill having a cutting edge is indirectly affixed to the tool head body by the sleeve, when a large load is applied thereto, the position of the sleeve may shift.

In the milling cutter of Patent Literature 2, the fastener for affixing the cartridge is formed in a wedge-like shape. When a centrifugal force is exerted on the fastener, the force acting due to the wedge is reduced, whereby the position of the cartridge may shift during rotation of the milling cutter.

A technical problem of the present invention is to solve these problems of the prior art, and an object of the present invention is to provide a face mill which prevents the cartridge from becoming misaligned due to centrifugal force during rotation of the face mill.

### [SOLUTION TO PROBLEM]

In order to achieve the object described above, according to the present invention, there is provided a face mill, which is a rotary tool which rotates about a rotational axis and which cuts a surface perpendicular to the rotational axis, the face mill comprising a cutter body having an accommodation hole which opens in the rotational axis direction, and a first through hole which is substantially perpendicular to the rotational axis and which penetrates through the accommodation hole from an outer periphery, a cartridge which is inserted into the accommodation hole and which has a cutting edge and a second through hole, a fastener which is inserted into the accommodation hole, which is arranged inside relative to the cartridge with respect to the rotational axis, and which has a threaded hole formed therein extending in a radial direction relative to the rotational axis, and an affixation bolt which is inserted into the first through hole from the outer periphery of the cutter body, passes through the second through hole, and is threaded into the threaded hole of the fastener to interpose and affix the cartridge between the outer periphery of the cutter body and the fastener.

### [ADVANTAGEOUS EFFECTS OF INVENTION]

According to the present invention, since the cartridge is inserted into the accommodation hole formed in the cutter body and is affixed by being interposed between the outer periphery of the cutter body and the fastener, the position of the cartridge will not shift due to centrifugal force.

### BRIEF DESCRIPTION OF DRAWINGS

FIG. 1 is a perspective view of a face mill according to a first embodiment of the present invention shown along with a tool holder.
FIG. 2 is a cross-sectional view of the face mill of FIG. 1.
FIG. 3 is a perspective view of a cutter body of the face mill in FIG. 1 as viewed from a tip side.
FIG. 4 is a perspective view of the cutter body of FIG. 3 as viewed from a rear end side.
FIG. 5 is a plan view showing a tip surface of the cutter body of FIG. 3.
FIG. 6 is a perspective view of a cartridge of the face mill of FIG. 1.
FIG. 7 is a front view of the cartridge of FIG. 6 as viewed in the direction of arrow VII.
FIG. 8 is a side surface view of the cartridge of FIG. 6 as viewed in the direction of arrow VIII.
FIG. 9 is a perspective view of a fastener of the face mill of FIG. 1.
FIG. 10 is a rear view of the fastener of FIG. 9 as viewed in the direction of arrow X.
FIG. 11 is a side surface view of the fastener of FIG. 9 as viewed in the direction of arrow XI.
FIG. 12 is a partial schematic view of a cartridge and a fastener inserted into an accommodation hole as viewed in an axial direction.
FIG. 13 is a schematic partial cross-sectional view of a cutter body shown with a cartridge and a fastener inserted into an accommodation hole according to a modification example.
FIG. 14 is a schematic partial cross-sectional view similar to FIG. 13 taken along a plane perpendicular to the rotational axis.
FIG. 15 is a perspective view showing a rear end surface of a cutter body in which a bearing surface of an accommodation hole has been machined by wire-cut electric discharge.
FIG. 16 is a plan view showing a tip surface of the cutter body of FIG. 15.
FIG. 17 is a perspective view of a face mill according to a second embodiment of the present invention shown along with a tool holder.
FIG. 18 is a cross-sectional view of the face mill of FIG. 17.
FIG. 19 is a perspective view of a first cutter body portion of the face mill of FIG. 17 as viewed from a tip side.
FIG. 20 is a perspective view of the first cutter body portion of FIG. 19 as viewed from a rear end side.
FIG. 21 is a perspective view of a second cutter body portion of the face mill of FIG. 17 as viewed from the tip side.
FIG. 22 is a perspective view of the second cutter body portion of FIG. 21 as viewed from a rear end side.
FIG. 23 is a cross-sectional view of the second cutter body portion of FIG. 21.
FIG. 24 is a side surface view showing an example of a positioning device.
FIG. 25 is a perspective view of a face mill according to a third embodiment of the present invention shown along with a tool holder.
FIG. 26 is a cross-sectional view of the face mill of FIG. 25.
FIG. 27 is a perspective view of the cutter body of the face mill of FIG. 25 as viewed from a tip side.
FIG. 28 is a cross-sectional view of the cutter body of FIG. 27.
FIG. 29 is a perspective view of a wedge member of a positioning device.
FIG. 30 is a side surface view of the wedge member of FIG. 29 as viewed in the direction of arrow XXX.
FIG. 31 is a rear view of the wedge member of FIG. 29 as viewed in the direction of arrow XXXI.
FIG. 32 is a front view of a cartridge of the face mill of FIG. 25
FIG. 33 is a partial schematic view showing a cartridge and a fastener inserted into an accommodation hole according to a modification example as viewed in the axial direction.
FIG. 34 is a perspective view of a cartridge to be inserted into the accommodation hole of FIG. 33.
FIG. 35 is a partial schematic view showing a cartridge and a fastener inserted into an accommodation hole according to a further modification example as viewed in the axial direction.
FIG. 36 is a partial schematic view showing an accommodation hole according to a modification example of FIG. 35 as viewed in the axial direction.
FIG. 37 is a cross-sectional view of a cartridge according to a modification example of FIG. 35.

### DESCRIPTION OF EMBODIMENTS

Preferable embodiments of the present invention will be described below with reference to the attached drawings.

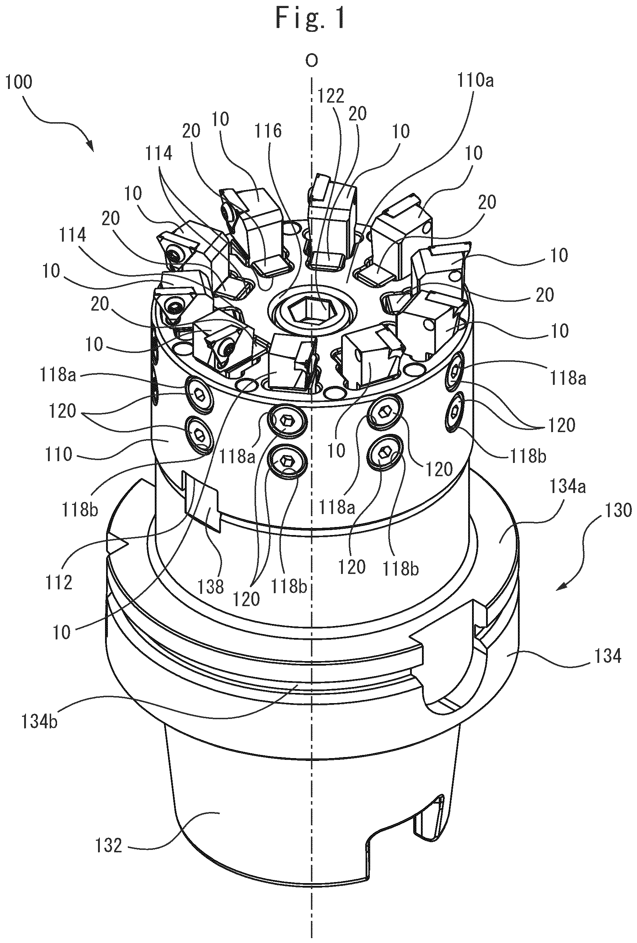

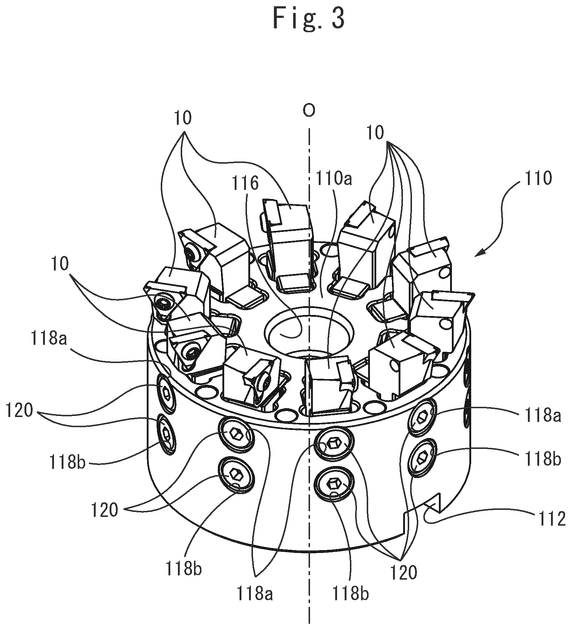

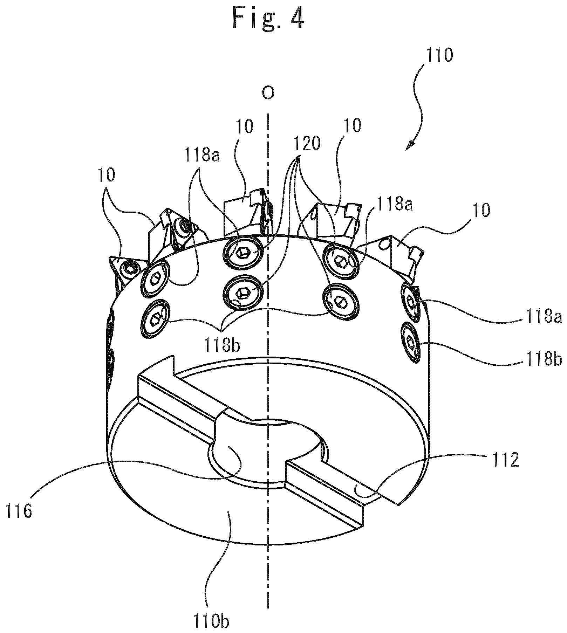

With reference to FIGS. 1 to 16, a face mill 100 according to a first embodiment of the present invention is a rotary tool which rotates about a rotational axis O and which cuts a surface of a workpiece perpendicular to the rotational axis O. The face mill 100 includes a generally cylindrical cutter body 110 which is formed so as to be attached to a tool holder 130. The cutter body 110 has a central opening 116 for receiving a central boss 136 of the tool holder 130, which will be described later. The cutter body 110 is affixed to the tool holder 130 by inserting an affixation screw 122 into the central opening 116. Furthermore, a notch 112 for receiving a positioning protrusion 138 of the tool holder 130, which will be described later, is formed on a rear end surface 110b of the cutter body 110, which contacts the tool holder 130.

The tool holder 130 has a tapered shank 132 which is inserted into a tapered hole (not illustrated) formed in the tip of a spindle (not illustrated) of a machine tool (not illustrated), a flange 134 having a contact surface 134a which abuts against the end surface of the spindle, a peripheral groove 134b formed on the outer periphery of the flange 134, and a central boss 136 which fits into a central opening 116 of the cutter body 110. Internal threading for engaging with the affixation screw 122 is formed in the central boss 136. The face mill 100 has a rotational axis O that matches the rotational axis of the spindle (not illustrated) when mounted on the spindle.

Though the tool holder 130 is a two-surface constrained type tool holder which complies with the HSK standard in the present embodiment, in the present invention, the tool holder 130 may be a tool holder having a 7/24 taper shank shape or a tool holder having a 1/10 taper hollow shank shape.

A plurality of accommodation holes 114 (ten in the present embodiment) for receiving cartridges 10 are formed in the cutter body 110. The accommodation holes 114 are arranged at equal angular intervals around the rotational axis O. The accommodation holes 114 extend in the direction of the rotational axis O and open in a tip surface 110a of the cutter body 110, which faces a workpiece (not illustrated). Though the accommodation holes 114 are formed as bottomed holes which are closed on the tool holder 130 side in the present embodiment, they may be through holes which open in both the tip surface 110a and the rear end surface 110b of the cutter body 110.

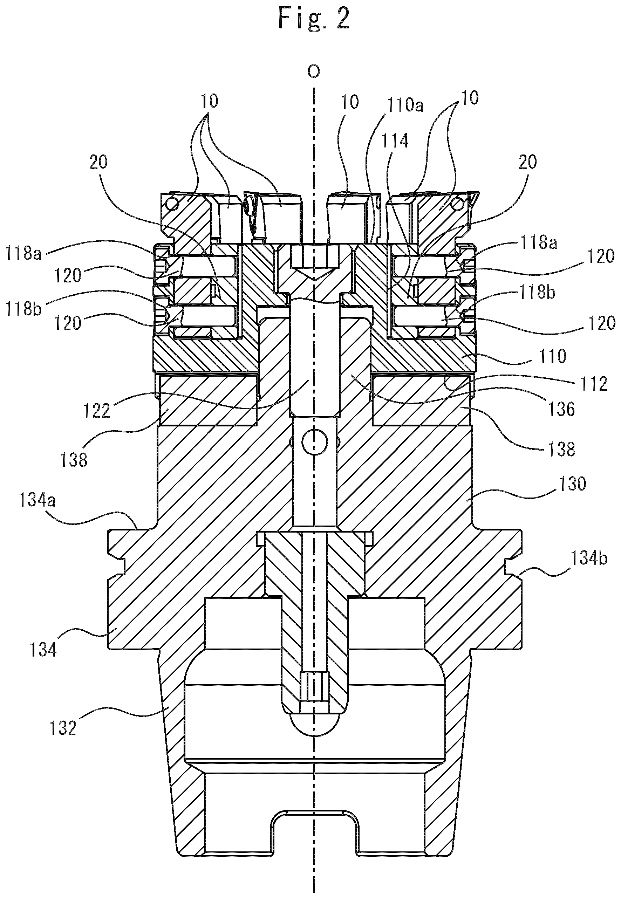

The cutter body 110 further has openings 118a, 118b as first through holes perpendicular to the rotational axis O. The openings 118a, 118b extend radially from the outer circumferential surface and are formed so as to open into the accommodation hole 114. As shown in the drawing, two openings 118a, 118b are provided for one accommodation hole 114. The two openings 118a, 118b preferably have a circular cross section and are arranged such that their centers are aligned with each other in the axial direction of the cutter body 110 (vertically in FIGS. 1 and 2 ).

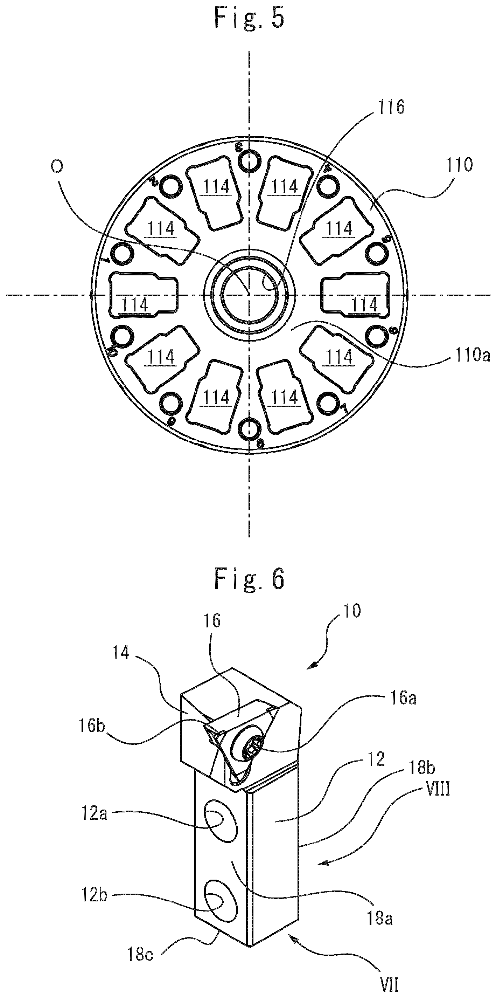

With reference to FIGS. 6 to 8, each cartridge 10 has a body 12 composed of a substantially rectangular parallelepiped member, and a head 14 is formed at one end of the body 12 (the upper end in FIGS. 6 to 8). A notch for receiving a cutting tip 16 is formed in the head 14. In the present embodiment, the cutting tip 16 is a plate-like or triangular prism-like throw-away tip having a triangular, preferably equilateral, end surface. The cutting tip 16 may also be a rectangular throw-away tip such as a diamond. The cutting tip 16 is affixed to the head 14 by an affixation screw 16a. The cutting edge may be affixed to the cartridge not only by screwing the cutting tip 16, but also by brazing or by forming the cutting edge integrally with the cartridge, rather than as a separate component.

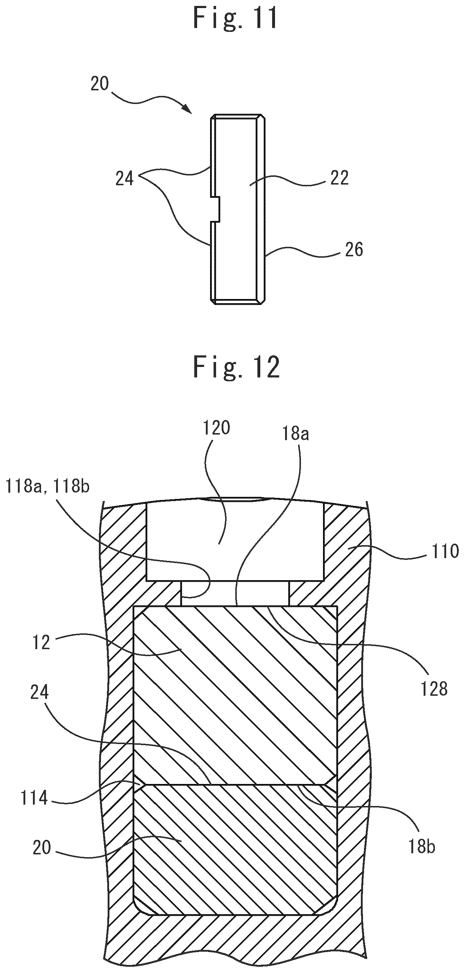

The body 12 of the cartridge 10 has an outer surface 18a and an inner surface 18b, as a second through hole, which are parallel to each other, and two through holes 12a, 12b which extend from the outer surface 18a to the inner surface 18b through the body 12. The outer surface 18a of the cartridge 10 is a contact surface which abuts against the inner surface (bearing surface 128 (refer to FIG. 12)) of the accommodation hole 114. The inner surface 18b is a pressure-receiving surface which is pressed by an outer surface 24, which is the pressing surface of a fastener 20, which will be described later.

The through holes 12a, 12b are formed so as to face in a radial direction with respect to the rotational axis O when the cartridge 10 is attached to the cutter body 110. Affixation screws 120 for affixing the cartridge 10 in the accommodation hole 114 of the cutter body 110 are inserted into the through holes 12a, 12b.

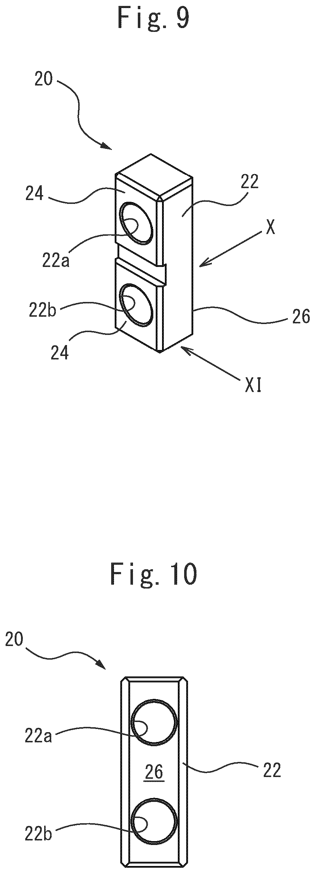

The accommodation hole 114 further accommodates a fastener 20. With reference to FIGS. 9 to 11, the fastener 20 is composed of a substantially rectangular parallelepiped member 22 having an outer surface 24 and an inner surface 26 which face each other, and has two threaded holes 22a, 22b extending from the outer surface 24 to the inner surface 26. The outer surface 24 acts as a pressing surface that presses the cartridge 10 radially outward against a bearing surface 128 of the accommodation hole 114.

Though the threaded holes 22a, 22b penetrate the fastener 20 in the present embodiment, the threaded holes 22a, 22b may extend to the inner surface 26. Internal threading for meshing with the affixation screw 120 are formed in the threaded holes 22a, 22b. The threaded holes 22a, 22b are formed so as to be oriented in a radial direction with respect to the rotational axis O when the fastener 20 is attached to the cutter body 110.

The accommodation hole 114 receives the cartridge 10 and the fastener 20 in the axial direction from the tip surface 100a of the cutter body 110. In the accommodation hole 114, the cartridge 10 is arranged radially outward of the fastener 20 with respect to the rotational axis O of the cutter body 110.

After the cartridge 10 and the fastener 20 are inserted into the accommodation hole 114, the affixation bolts 120 are inserted through the openings 118a, 118b of the cutter body 110 and the through holes 12a, 12b of the cartridge 10, and screwed into the threaded holes 22a, 22b of the fastener 20.

By further tightening the affixation screw 120, the outer surface 24, which is the pressing surface of the fastener 20, comes into contact with the inner surface 18b, which is the pressure-receiving surface of the cartridge 10, and is pressed against the inner surface 18b. By tightening the affixation bolt 120 in this manner, the cartridge 10 is interposed and affixed between the bearing surface 128 of the accommodation hole 114 of the cutter body 110 and the outer surface 24, which is the pressing surface of the fastener 20, as shown in FIG. 12. In the present embodiment, the bearing surface 128 is formed by the inner surface of the accommodation hole 114 in which the openings 218a, 218b are formed. The bearing surface 128 is formed by a plane positioned radially outward and perpendicular to the radial direction.

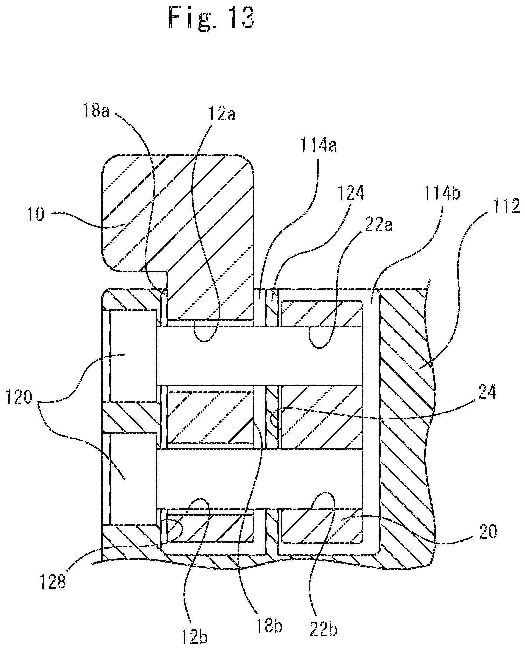

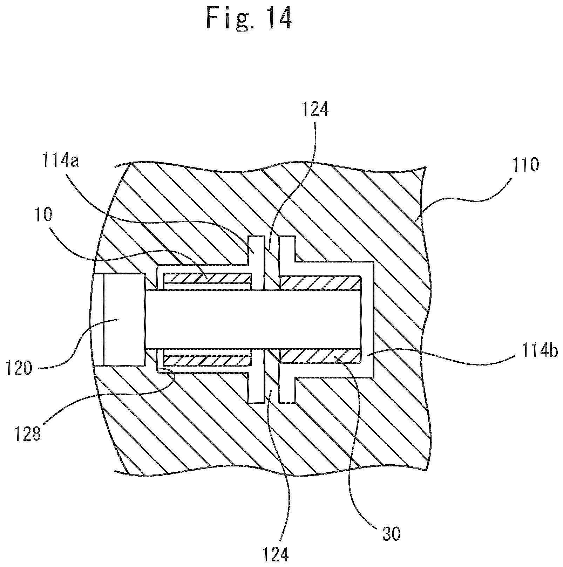

Though both the cartridge 10 and the fastener 20 are accommodated in one accommodation hole 114 in the embodiment described above, the present invention is not limited thereto. With reference to FIGS. 13 and 14, the accommodation hole 114 is divided by a thin partition 124 into a first accommodation part 114a for accommodating the cartridge 10 and a second accommodation part 114b for accommodating the fastener 20. An opening (not illustrated) for inserting the affixation screw 120 is formed in the partition 124. The thickness of the partition 124 (the radial dimension with respect to the rotational axis O) may be, for example, 0.8 mm.

In the present embodiment, as shown in FIGS. 13 and 14, the cartridge 10 is inserted into the first accommodation part 114a, and the fastener 20 is inserted into the second accommodation part 114b, and the affixation screws 120 are then inserted through the openings 118a, 118b of the cutter body 110, the through holes 12a, 12b of the cartridge 10, and the openings of the partition 124, and screwed into the threaded holes 22a, 22b of the fastener 20.

Next, by tightening the affixation screw 120, the partition 124 is biased by the fastener 20 and bulges and deforms radially outward, whereby the cartridge 10 is interposed and affixed between the bearing surface 128 and the partition 124 in the first accommodation part 114a.

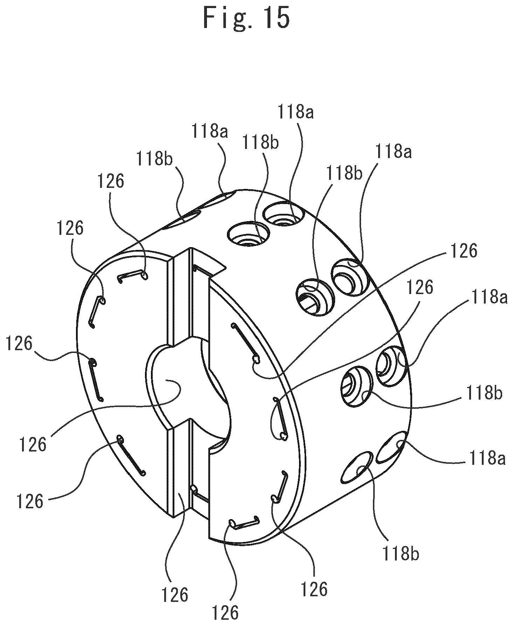

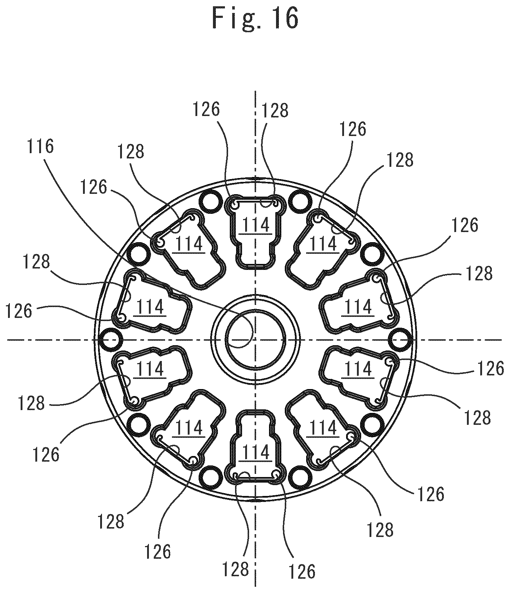

Since the bearing surface 128 is very important for correctly positioning the cartridge 10, and in particular, for correctly positioning the corner-cutting blade 16b of the throw-away tip 16 attached to the cartridge 10 in the radial direction, it is desirable to machine the bearing surface 128 precisely. As an example, the bearing surface 128 can be machined using a wire-cut electric discharge machine. Thus, as shown in FIGS. 15 and 16, a small hole 126 is formed axially from the rear end surface 110b of the cutter body 110 so as to open into the accommodation hole 114, and the small hole 126 is used as a starting hole for forming the bearing surface 128 by wire-cut electric discharge machining.

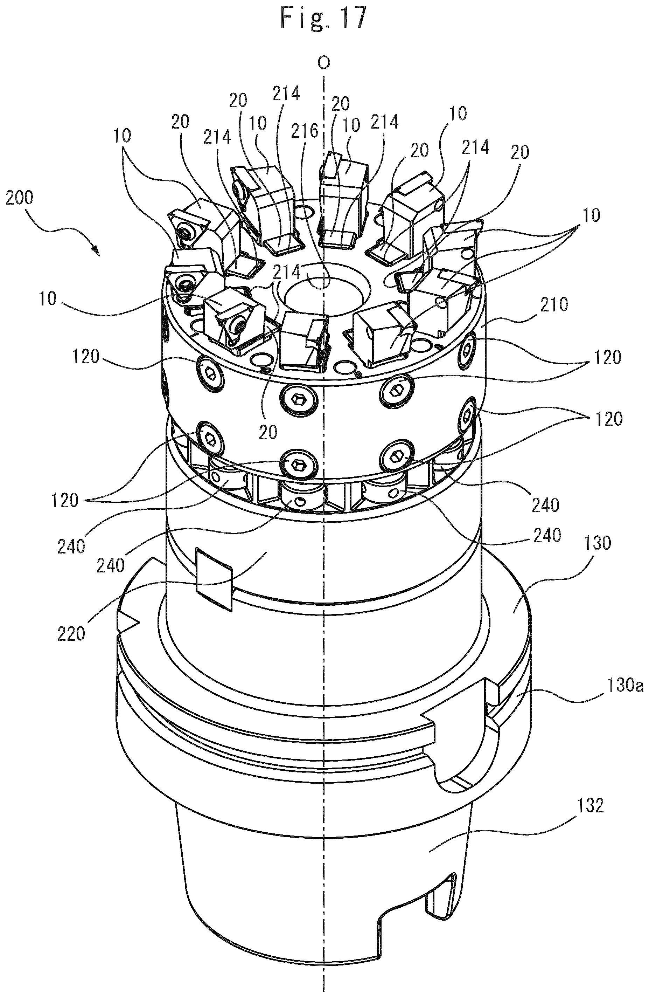

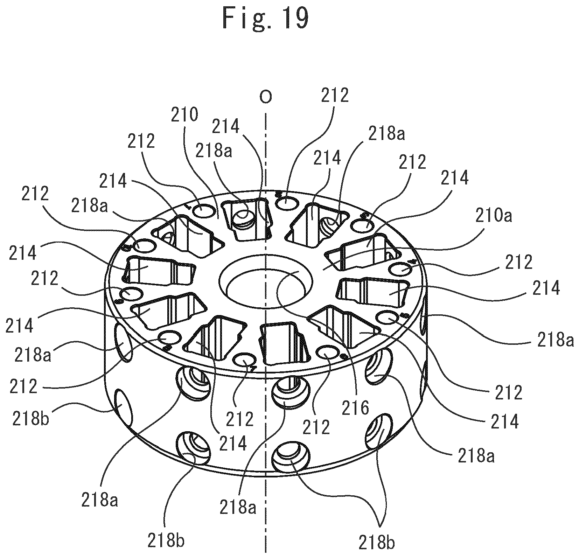

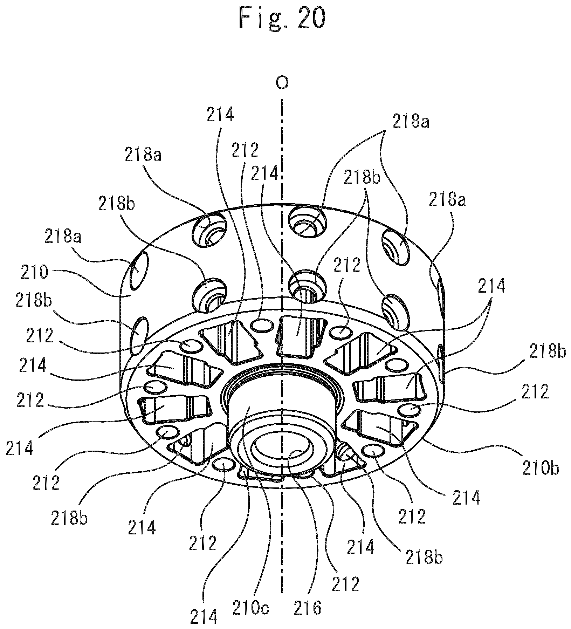

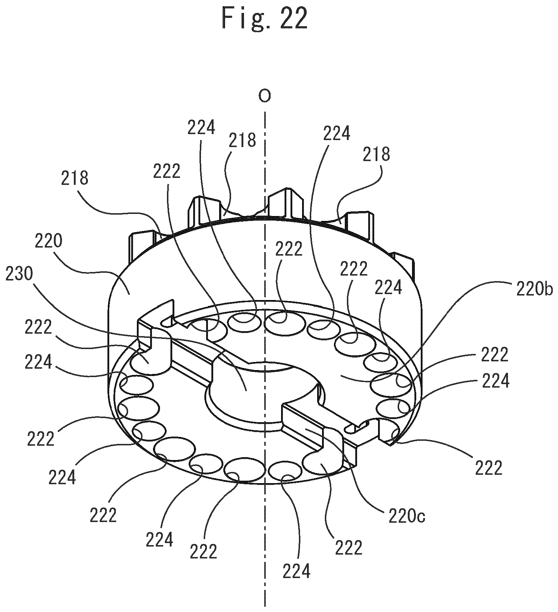

Next, a second embodiment of the present invention will be described with reference to FIGS. 17 to 24. In FIGS. 17 to 24, constituent elements which are similar to or which correspond to those in the previously described embodiment have been assigned the same reference signs, and duplicate descriptions thereof have been omitted below.

A face mill 200 according to the second embodiment includes a generally cylindrical cutter body configured for attachment to the tool holder 130. In the present embodiment, the cutter body is constituted by a first cutter body portion 210 and a second cutter body portion 220.

The first cutter body portion 210 has a center hole 216 for inserting the affixation screw 122, and a plurality of accommodation holes 214 (ten in the present embodiment) for receiving cartridges 10. The accommodation holes 214 are arranged at equal angular intervals around the rotational axis O. The accommodation holes 214 are formed so as to penetrate the first cutter body portion 210 in the axial direction from an end surface (tip surface) 210a of the first cutter body portion 210 facing the workpiece (not illustrated) to an end surface (rear end surface) 210b facing the second cutter body portion 220.

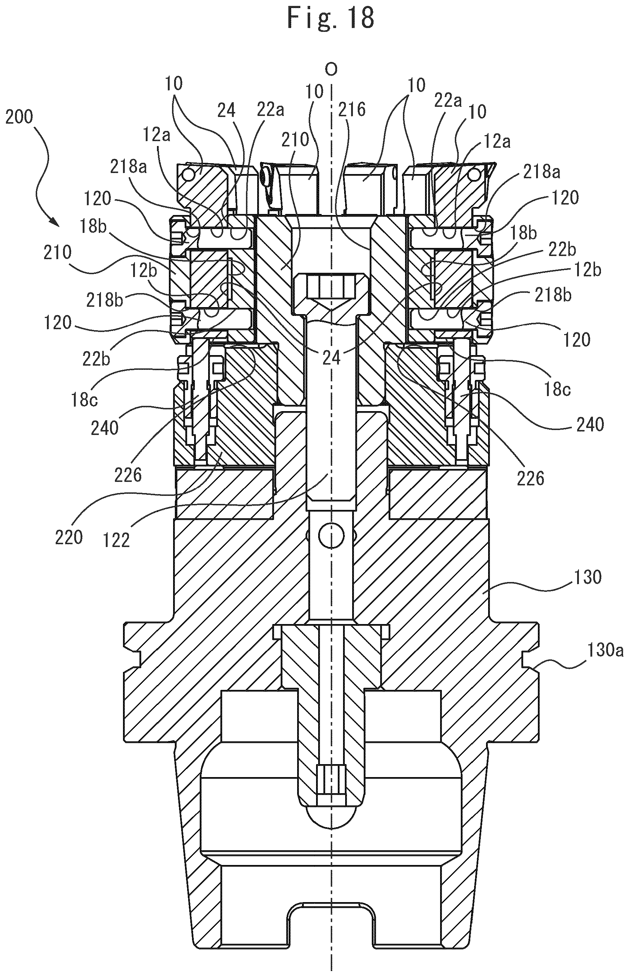

Openings 218a, 218b as first through holes are further formed in the first cutter body portion 210. The openings 218a, 218b extend radially from the outer circumferential surface and are formed so as to open in the accommodation hole 214. As shown in the drawing, two openings 218a, 218b are provided for one accommodation hole 214. The two openings 218a, 218b preferably have circular cross sections and are arranged such that their centers are aligned with each other in the axial direction of the first cutter body portion 210 (vertically in FIGS. 18 to 20).

The inner surface of the accommodation hole 214, in which the openings 218a, 218b are formed, serves as a bearing surface consisting of a plane perpendicular to the radial direction, in the same manner as the previously described embodiment.

A plurality of bolt holes 212 which axially penetrate the first cutter body portion 210 are further formed in the first cutter body portion 210. The plurality of bolt holes 212 can be arranged between the accommodation holes 114 near the outer circumferential surface of the first cutter body portion 210. The plurality of bolt holes 212 are internally threaded. The first cutter body portion 210 further has a boss 210c that protrudes in the axial direction from the rear end surface 210b.

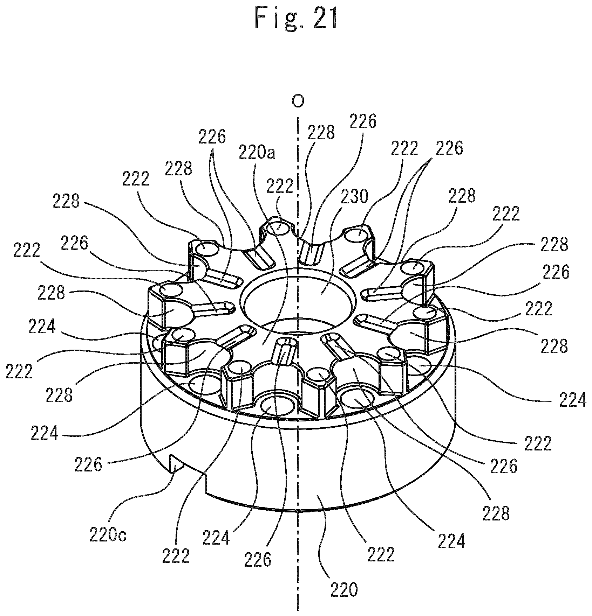

With reference to FIGS. 21 to 23, the second cutter body portion 220 has a portion adjacent to the first cutter body portion 210 when assembled, with a plurality of recesses 228 corresponding to the accommodation holes 214 of the first cutter body portion 210. Each of the recesses 228 is formed at a predetermined depth in the axial direction from a front end surface 220a, which contacts the first cutter body portion 210, and at a predetermined depth in the radial direction from the outer periphery of the first cutter body portion 210.

The second cutter body portion 220 further has a plurality of through holes 222 and a plurality of receiving holes 224 for a positioning device. The plurality of through holes 222 and the receiving holes 224 are arranged alternately at equal angular intervals in the circumferential direction of the second cutter body portion 220. The plurality of through holes 222 extend axially through the second cutter body portion 220 from a rear end surface 220b to the front end surface 220a of the second cutter body portion 220.

A plurality of relief grooves 226 may also be formed in the front end surface 220a of the second cutter body portion 220. In this case, the relief grooves 226 may be arranged such that the fastener 20 is arranged directly above a corresponding relief groove 226 when the first cutter body portion 210 and the second cutter body portion 220 are joined and the cartridge 10 and the fastener 20 are inserted into the accommodation hole 214.

Each of the plurality of receiving holes 224 extends axially so as to open in a recess 228. In the illustrated embodiment, each of the plurality of receiving holes 224 axially penetrates the second cutter body portion 220 from the rear end surface 220b of the second cutter body portion 220 to a respective recess 228. An inner peripheral surface of the receiving hole 224 may have internal threading for engaging with a positioning device, which will be described later.

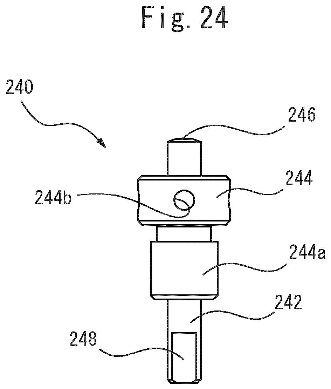

The face mill 200 comprises a positioning device for axially positioning the cartridge 10 with respect to each of the receiving holes 224. As an example of the positioning device, a differential screw 240 will be described with reference to FIG. 24. Note that the positioning device may be a single acting screw.

The differential screw 240 as a positioning device comprises a threaded shaft 242 and a knurled screw 244. The knurled screw 244 has a first threaded part 244a, which is externally threaded for engaging with the internal threading of the receiving hole 224, at a tip thereof, and a wrench hole 244b for inserting a wrench (not illustrated) when rotating the knurled screw 244 at a side surface thereof. The threaded shaft 242 has a flat part 248 at a tip thereof, and a contact part 246 at an end thereof opposite the flat part 248. The flat part 248 is inserted into a square hole (not illustrated) at the receiving hole 224 to prevent the threaded shaft 242 from rotating relative to the receiving hole 224.

A second threaded part (not illustrated) which engages with internal threading (not illustrated) provided on the inside of the knurled screw 244 is formed on the threaded shaft 242 between the flat part 248 and the contact part 246. The second threaded part has a pitch smaller than the pitch of the first threaded part 244a.

When the knurled screw 244 is rotated by one revolution, the knurled screw 244 moves in the axial direction by a distance equal to one pitch of the first threaded part 244a relative to the second cutter body portion 220. At this time, since the threaded shaft 242 cannot rotate relative to the receiving hole 224, it moves in the axial direction together with the knurled screw 244 by a distance equal to one pitch of the first threaded part 244a, and at the same time, moves in the direction opposite to the movement direction of the knurled screw 244 relative to the knurled screw 244 by a distance equal to one pitch of the second threaded part. As a result, when the knurled screw 244 is rotated by one revolution, the threaded shaft 242 moves in the axial direction by a distance equal to the difference between the pitch of the first threaded part 244a and the pitch of the second threaded part. This differential mechanism allows fine adjustment of the position of the contact part 246.

The second cutter body portion 220 also has a central opening 230 for receiving the boss 210c of the first cutter body portion 210. A notch 220c for receiving the positioning protrusion 138 of the tool holder 130 is formed in the rear end surface 220b of the second cutter body portion 220.

Prior to assembly of the cutter body, the differential screw 240 is assembled by screwing together the internal threading of the knurled screw 244 and the second threaded part of the threaded shaft 242. Next, the flat part 248 of the threaded shaft 242 is inserted into the square hole of the receiving hole 224 of the second cutter body portion 220, while the first threaded part 244a of the knurled screw 244 is engaged with the internal threading of the receiving hole 224, and the differential screw 240 is attached to the second cutter body portion 220.

Next, while aligning each of the plurality of bolt holes 212 of the first cutter body portion 210 with the plurality of through holes 222 of the second cutter body portion 220, the boss 210c of the first cutter body portion 210 is fitted into the central opening 230 of the second cutter body portion 220.

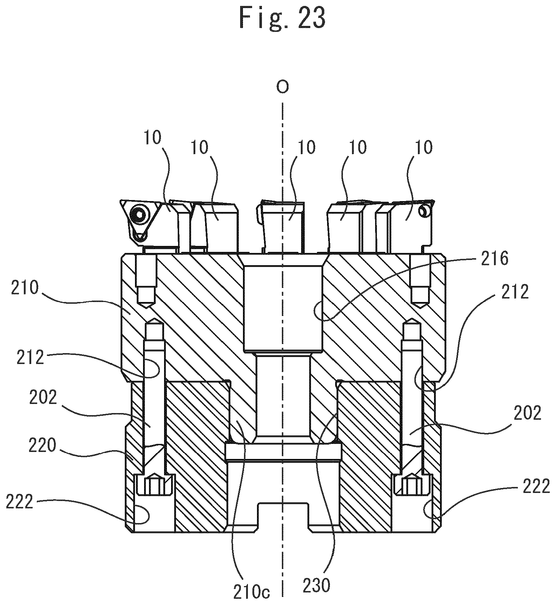

Next, the affixation bolt 202 is inserted through the through hole 222 and screwed and tightened into the internal threading of the bolt hole 212, and the affixation bolt 202 is inserted through the through hole 222 and screwed and tightened into the internal threading of the bolt hole 212 of the first cutter body portion 210, thereby joining the first cutter body portion 210 and the second cutter body portion 220 (refer to FIG. 23). At this time, the positioning device, and in the present embodiment, the knurled screw 244 of the differential screw 240, is accessible from the outside of the cutter body such that a wrench can be inserted into the wrench hole 244b to rotate the knurled screw 244.

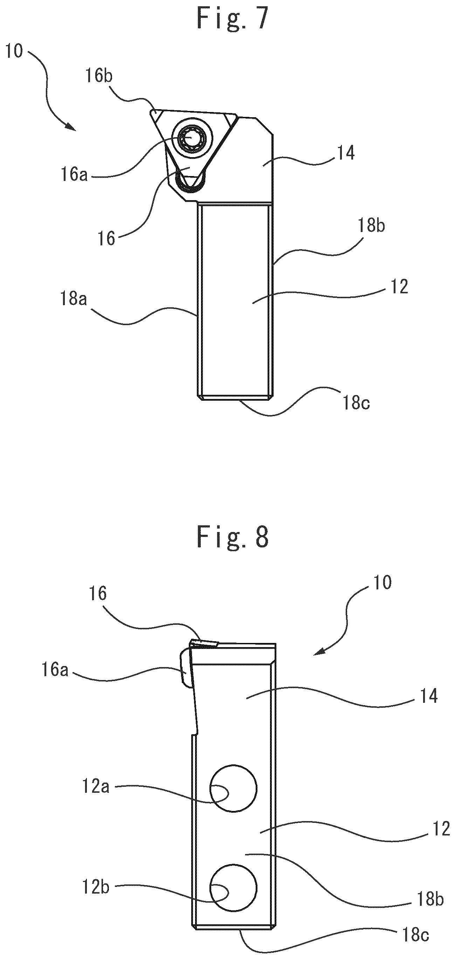

When the first cutter body portion 210 and the second cutter body portion 220 are joined, the contact part 246 of the threaded shaft 242 of the differential screw 240, which serves as a positioning device, is arranged in a position capable of abutting the lower end surface 18c (refer to FIG. 8) of the body 12 of the cartridge 10 within the accommodation hole 214.

Next, after arranging the cartridge 10 and fastener 20 in the accommodation hole 214, the affixation bolts 120 are inserted through the openings 218a, 218b of the first cutter body portion 210 and the through holes 12a, 12b of the cartridge 10, and screwed into the threaded holes 22a, 22b of the fastener 20, in the same manner as the previously described embodiment.

After the affixation screw 120 is tightened to such an extent that the cartridge 10 cannot easily move within the accommodation hole 214, the knurled screw 244 of the differential screw 240, which serves as a positioning device, is rotated, thereby enabling precise axial positioning of the cartridge 10. By further tightening the affixation screw 120 after the cartridge 10 has been positioned axially, the cartridge 10 is radially pressed against the bearing surface of the accommodation hole 214 and affixed within the accommodation hole 214 without moving axially.

Though the positioning device is a differential screw 240 having a threaded shaft 242 that moves axially in the embodiment described above, the present invention is not limited thereto. The positioning device may also have a threaded shaft that moves radially about the rotational axis O.

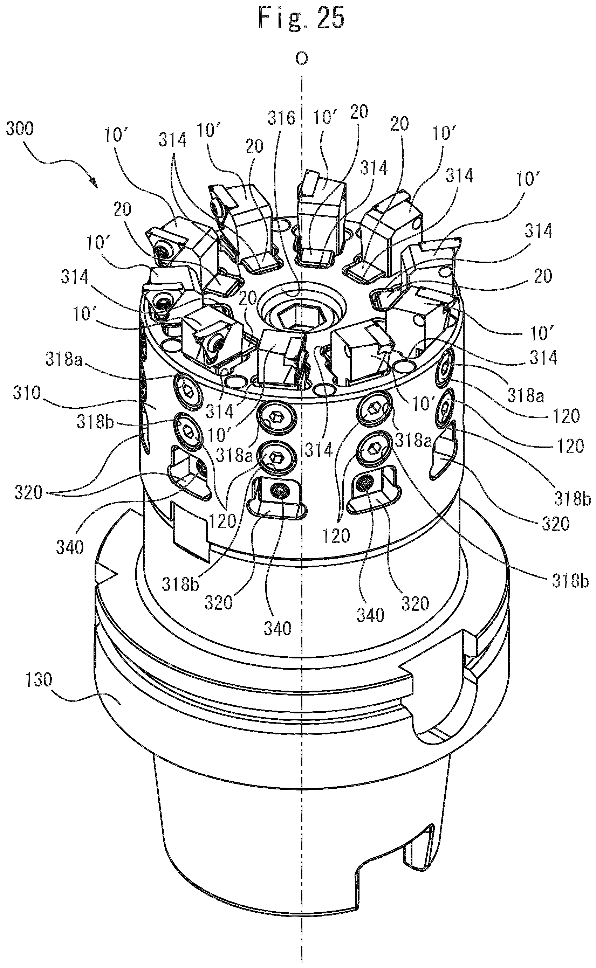

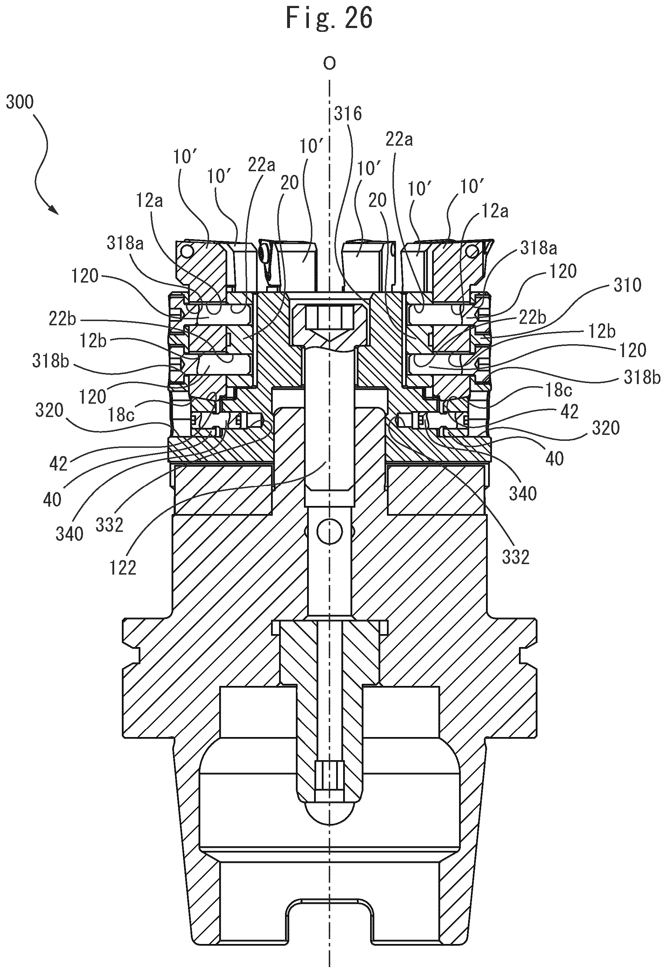

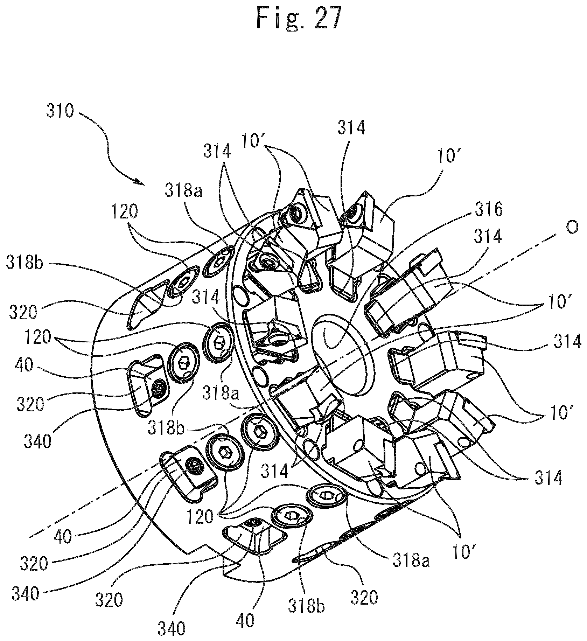

A third embodiment of the present invention will be described with reference to FIGS. 25 to 32. In FIGS. 25 to 32, constituent elements which are similar to or which correspond to those in the previously described embodiments have been assigned the same reference signs, and duplicate descriptions thereof have been omitted.

A face mill 300 according to the third embodiment of the present invention includes a generally cylindrical cutter body 310 configured to be attached to a tool holder 130. The cutter body 310 has a center hole 316 for receiving an affixation screw 122, a plurality of accommodation holes 314 (ten in the present embodiment) for receiving cartridges 10, and a plurality of recesses 320 for arranging positioning devices. Each recess 320 includes a threaded hole 322 having internal threading formed therein. The threaded hole 322 extends in a radial direction with respect to a rotational axis O.

The accommodation holes 314 are arranged at equal angular intervals around the rotational axis O. Openings 318a, 318b as first through holes are further formed in the cutter body 310. The openings 318a, 318b extend radially from the outer circumferential surface and are formed so as to open into the accommodation hole 314. As shown in the drawing, two openings 318a, 318b are provided for one accommodation hole 314. The two openings 318a, 318b preferably have a circular cross section and are arranged such that their centers are aligned with each other in the axial direction of the first cutter body portion 210 (vertically in FIGS. 25 to 32).

Note that in the inner surface of the accommodation hole 314, the inner surface in which the openings 318a, 318b are formed serves as a bearing surface consisting of a plane perpendicular to the radial direction in the same manner as the previously described embodiments.

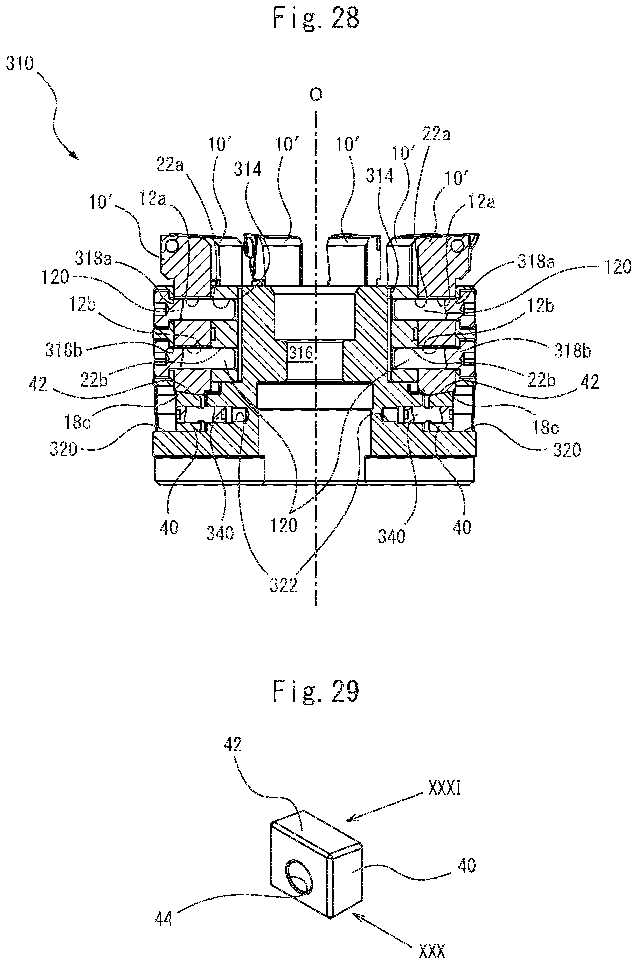

The face mill 300 comprises a positioning device for axially positioning a cartridge 10' with respect to each of the accommodation holes 314. In the present embodiment, the positioning device comprises a wedge member 40 shown in FIGS. 29 to 31 and a drive screw 340 for driving the wedge member 40.

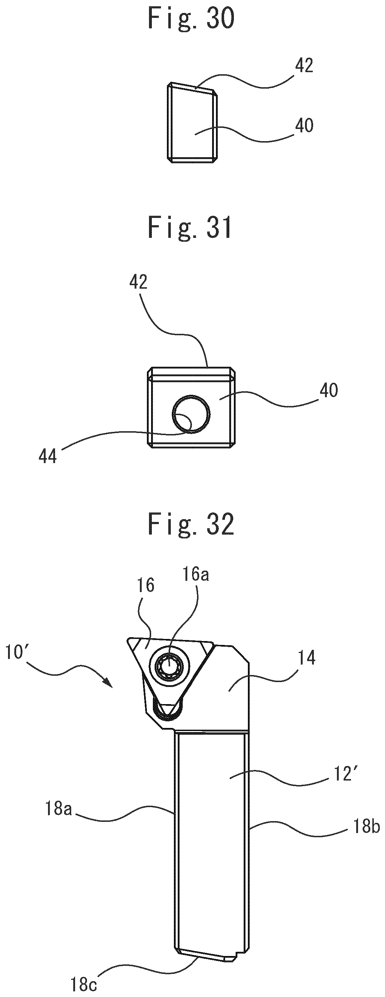

The wedge member 40 as a positioning device is a substantially rectangular parallelepiped member, and has a threaded hole 44 formed therethrough from one of the opposing side surfaces to the other. The threaded hole 44 is formed so as to extend in a radial direction with respect to the rotational axis O when attached to the cutter body 310. The wedge member 40 has an engagement surface 42 for engaging with the lower end surface of the cartridge 10'. As shown in FIG. 30, the engagement surface 42 is inclined in the radial direction with respect to the rotational axis O when attached to the cutter body 310.

The drive screw 340 has a first threaded part for engaging with the threaded hole 322 of the recess 320 and a second threaded part for engaging with the threaded hole 44 of the wedge member 40. Reverse threading is formed in the first threaded part and the second threaded part. Thus, when the drive screw 340 is rotated, the wedge member 40 is configured to move toward or away from the threaded hole 322.

In the present embodiment, the lower end surface 18c of the cartridge 10' is inclined in the radial direction with respect to the rotational axis O so as to correspond (or conform?) to the engagement surface 42 of the wedge member 40 when attached to the cutter body 310, as shown in FIG. 32.

When assembling the cutter body 310, the wedge member 40 is attached to the cutter body 310 by first threading the first threaded part of the drive screw 340 into the threaded hole 332 of the recess 320 in a state in which the second threaded part of the drive screw 340 is threaded into the threaded hole 44.

Next, after arranging the cartridge 10' and fastener 20 in the accommodation hole 314, the affixation bolts 120 are inserted through the openings 318a, 318b of the first cutter body portion 210 and the through holes 12a, 12b of the cartridge 10, and screwed into the threaded holes 22a, 22b of the fastener 20, in the same manner as the previously described embodiments.

After the affixation screw 120 is tightened to an extent that the cartridge 10' does not easily move within the accommodation hole 314, the wedge member 40 can be moved radially by rotating the drive screw 340, thereby enabling precise axial positioning of the cartridge 10'. By further tightening the affixation screw 120 after the cartridge 10' has been positioned axially, the cartridge 10' is pressed radially against the bearing surface of the accommodation hole 314 and affixed within the accommodation hole 314 without moving axially.

Though the bearing surface is formed by a plane perpendicular to the radial direction on the inner surface of the accommodation hole 114, 214, 314 where the openings 218a, 218b are formed in the embodiments described above, the present invention is not limited thereto, and the bearing surface can take other forms. In short, the bearing surface may be an inner surface of the accommodation hole 114, 214, 314 with which the cartridge 10, 10' can be positioned in the radial direction when the cartridge 10, 10' is pressed radially outward by the fastener 20.

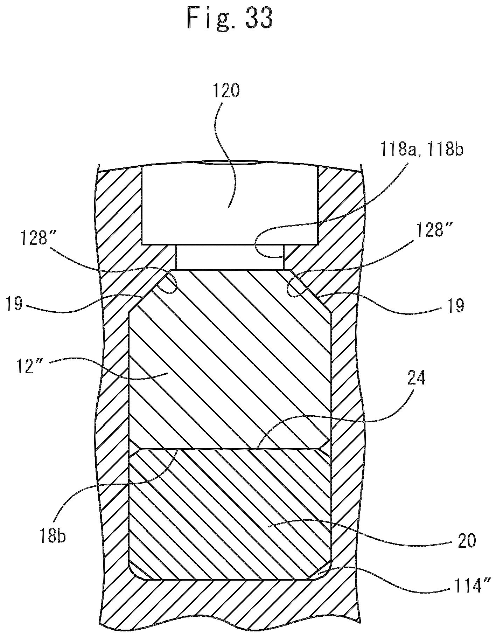

For example, referring to FIG. 33, an accommodation hole 114" has two bearing surfaces 128" adjacent to the inner surface on which the openings 118a, 118b are formed. The two bearing surfaces 128" are formed symmetrically with respect to the axis so as to approach each other in the radially outward direction.

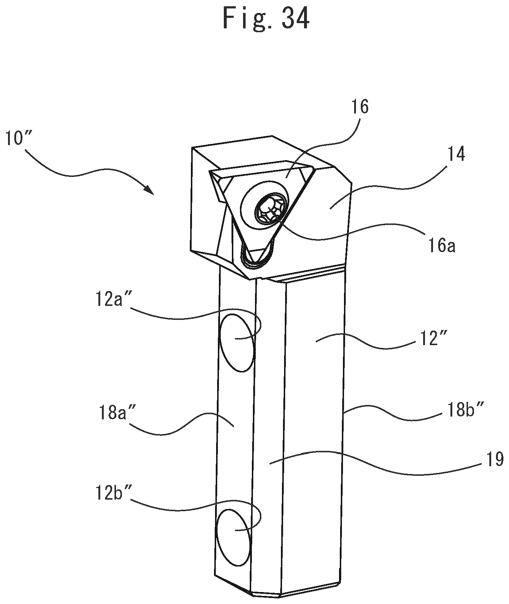

In this case, the cartridge also has a contact surface which conforms to the shape of the bearing surface 128". Referring to FIG. 34, the cartridge 10" has a rectangular columnar body 12". The body 12" has two contact surfaces 19 adjacent to the outer surface 18a" in which the through holes 12a", 12b" are formed. The two contact surfaces 19 are chamfered and inclined so as to approach each other radially outward. According to the present embodiment, the cartridge 10" is less likely to shift in position in the circumferential direction during processing, compared to the flat bearing surface 128 described above.

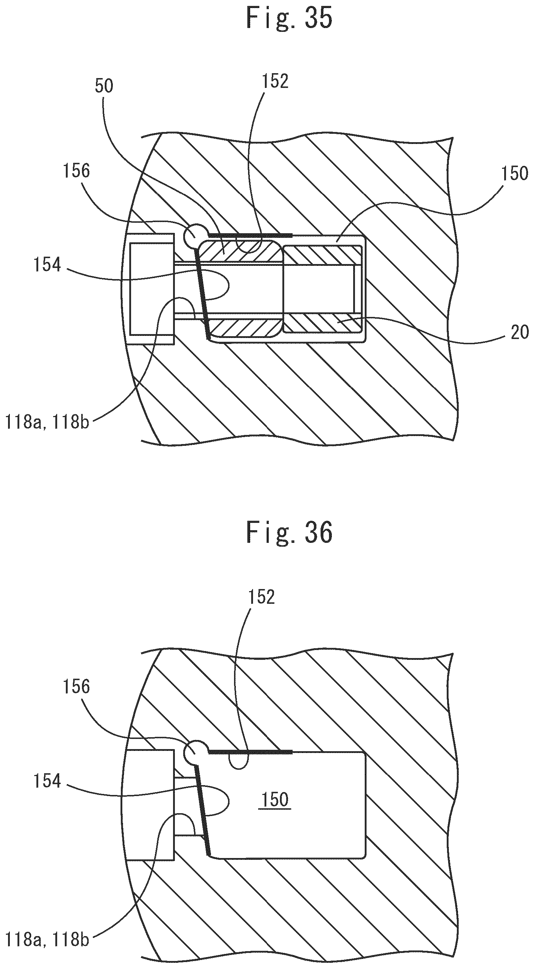

Further, with reference to FIGS. 35 to 37, the accommodation hole 150 has a first bearing surface 152 and a second bearing surface 154. Though the bearing surfaces 128" are spaced apart from each other in the circumferential direction about the rotational axis O in the example of FIG. 33, in the examples of FIGS. 35 to 37, the first bearing surface 152 and the second bearing surface 154 are connected to each other. A small hole 156 between the first bearing surface 152 and the second bearing surface 154 is a starting hole for when the bearing surfaces 152, 154 are machined by a wire-cut electric discharge machine.

The first bearing surface 152 is parallel to the rotational axis O but is inclined with respect to the radial direction. The second bearing surface 154 is parallel to both the rotational axis O and the radial direction. The second bearing surface 154 is an inner surface that is on the rear side with respect to the rotation direction of the face mill during machining.

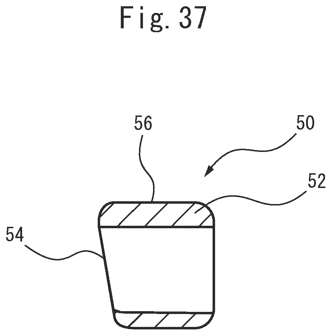

In this case as well, the cartridge has contact surfaces which conform to the shapes of the first bearing surface 152 and the second bearing surface 154. With reference to FIG. 37, the body 52 of the cartridge 50 has an outer surface 54 which extends parallel to the rotational axis O of the cutter body but is inclined relative to the radial direction, and serves as a first contact surface that abuts against the first bearing surface 152. A side surface 56 extends parallel to both the rotational axis O and the radial direction, and serves as a second contact surface that abuts against the second bearing surface 154. The second contact surface 56 is the side surface of the cartridge body that is on the rear side in the rotation direction of the face mill during machining. According to the present embodiment, the position of the cartridge 50 is less likely to shift in the circumferential direction during machining as compared to the planar bearing surface 128 described above.

### DESCRIPTION OF REFERENCE SIGNS

- 10: Cartridge
- 12: Body
- 12a: Through Hole
- 12b: Through Hole
- 14: Head
- 16: Throw-Away Tip
- 16b: Corner-Cutting Blade
- 18a: Outer Surface
- 18b: Inner Surface
- 18c: Lower End Surface
- 19: Contact Surface
- 20: Fastener
- 22: Member
- 22a: Threaded Hole
- 22b: Threaded Hole
- 24: Outer Surface
- 26: Inner Surface
- 40: Wedge Member
- 42: Engagement Surface
- 44: Threaded Hole
- 50: Cartridge
- 52: Body
- 54: First Contact Surface
- 56: Second Contact Surface
- 56: Side Surface
- 100: Face Mill
- 100a: Tip Surface
- 110: Cutter Body
- 110a: Tip Surface
- 110b: Rear End Surface
- 112: Notch
- 114: Accommodation Hole
- 114a: First Accommodation Part
- 114b: Second Accommodation Part
- 116: Central Opening
- 118a: Opening
- 118b: Opening
- 120: Affixation Bolt
- 120: Cartridge Affixation Bolt
- 126: Small Hole
- 128: Bearing Surface
- 130: Tool Holder
- 132: Tapered Shank
- 134: Flange
- 134a: Contact Surface
- 134b: Peripheral Groove
- 136: Central Boss
- 138: Protrusion
- 150: Accommodation Hole
- 152: First Bearing Surface
- 154: Second Bearing Surface
- 156: Small Hole
- 200: Face Mill
- 202: Affixation Bolt
- 210: First Cutter Body Portion
- 210a: Tip Surface
- 210b: Rear End Surface
- 210c: Boss
- 212: Bolt Hole
- 214: Accommodation Hole
- 216: Center Hole
- 218a: Opening
- 218b: Opening
- 220: Second Cutter Body Portion
- 220a: Front End Surface
- 220b: Rear End Surface
- 220c: Notch
- 222: Through Hole
- 224: Receiving Hole
- 226: Relief Groove
- 228: Recess
- 230: Central Opening
- 242: Threaded Shaft
- 244: Knurled Screw
- 244a: First Threaded Part
- 244b: Wrench Hole
- 246: Contact Part
- 248: Flat Part
- 300: Face Mill
- 310: Cutter Body
- 314: Accommodation Hole
- 316: Center Hole
- 318a: Opening
- 318b: Opening
- 320: Recess
- 322: Threaded Hole
- 332: Threaded Hole

## Claims

1. A face mill, which is a rotary tool which rotates about a rotational axis and which cuts a surface perpendicular to the rotational axis, the face mill comprising:
a cutter body having an accommodation hole which opens in the rotational axis direction, and a first through hole which is substantially perpendicular to the rotational axis and which penetrates through the accommodation hole from an outer periphery,
a cartridge which is inserted into the accommodation hole and which has a cutting edge and a second through hole,
a fastener which is inserted into the accommodation hole, which is arranged inside relative to the cartridge with respect to the rotational axis, and which has a threaded hole formed therein extending in a radial direction relative to the rotational axis, and
an affixation bolt which is inserted into the first through hole from the outer periphery of the cutter body, passes through the second through hole, and is threaded into the threaded hole of the fastener to interpose and affix the cartridge between the outer periphery of the cutter body and the fastener.

2. The face mill according to claim 1, further comprising a positioning device for positioning the cartridge in the rotational axis direction.

3. The face mill according to claim 2, wherein the cutter body comprises a recess arranged below the accommodation hole,
the positioning device includes a threaded shaft which screws into the cutter body and which extends in the rotational axis direction, and
the threaded shaft is arranged in the recess such that a tip of the threaded shaft is capable of abutting against a lower end of a cartridge inserted in the accommodation hole.

4. The face mill according to claim 2, wherein the cutter body comprises a recess arranged below the accommodation hole,
the positioning device includes a wedge member which has an engagement surface inclined in the radial direction, and a drive screw for moving the wedge member in the radial direction relative to the rotational axis, and
the wedge member is arranged in the recess such that the engagement surface is capable of engaging with a lower end of a cartridge inserted into the accommodation hole.

5. The face mill according to claim 1, wherein an inner surface of the accommodation hole has a bearing surface which contacts the cartridge inserted into the accommodation hole in a radial direction relative to the rotational axis and which supports the cartridge in the radial direction, and the cartridge has a contact surface which abuts against the bearing surface.

6. The face mill according to claim 5, wherein the bearing surface is a plane perpendicular to the radial direction.

7. The face mill according to claim 5, wherein the bearing surface is a pair of flat surfaces approaching each other in the radially outward direction, and the contact surface of the cartridge is constituted by a pair of flat surfaces approaching each other in the radially outward direction.

8. The face mill according to claim 5, wherein the bearing surface comprises a first bearing surface and a second bearing surface which are connected to each other, the first bearing surface is parallel to the rotational axis and inclined in the radial direction, the second bearing surface is parallel to both the rotational axis and the radial direction, and
the contact surface of the cartridge comprises a first contact surface parallel to the rotational axis and inclined relative to the radial direction, and a second contact surface extending parallel to both the rotational axis and the radial direction.

9. The face mill according to claim 5, wherein the bearing surface is formed by a wire-cut electric discharge machine, and
the accommodation hole penetrates in the direction of the rotational axis at least in the portion forming the bearing surface.
